## Europäisches Patentamt

## European Patent Office

## Office européen des brevets

(19)

(11) Veröffentlichungsnummer: **0 087 622**

**A1**

(12) # EUROPÄISCHE PATENTANMELDUNG

(21) Anmeldenummer: **83101188.7**

(22) Anmeldetag: **08.02.83**

(51) Int. Cl.³: **G 09 B 19/02**

(30) Priorität: **25.02.82 HU 58582**

(43) Veröffentlichungstag der Anmeldung:
**07.09.83 Patentblatt 83/36**

(84) Benannte Vertragsstaaten:
**AT BE CH DE FR GB LI LU NL SE**

(71) Anmelder: **Lemezáru Gyár**
**Mautner S. u. 60-64**
**H-1389 Budapest, XIII(HU)**

(72) Erfinder: **Mike, Sándor**
**Paskom u.2.**
**H-2113 Erdőkertes(HU)**

(72) Erfinder: **Szirt, Lászlo**
**Gyakorlo u.18**
**H-1106 Budapest(HU)**

(74) Vertreter: **Patentanwälte Viering & Jentschura**
**Steinsdorfstrasse 6**
**D-8000 München 22(DE)**

(54) **Zahlenlogisches Spiel.**

(57) Die Erfindung betrifft ein zahlenlogisches Spiel, das zum Erlernen und Einüben von Rechenoperationen der Grundstufe als Lehrmittel geeignet ist, in späteren Jahren aber als angenehmes und nützliches Zerstreuungsmittel dienen, und das ferner auch zum Lösen zusammengesetzterer bzw. komplizierterer mathematischer Operationen, zum Lösen von Gleichungen und zur Weiterentwicklung des mathematischen Wissens gleichermaßen benützt werden kann.

Das Spiel besteht aus mit Zahlen oder arithmetischen Operationszeichen (+, −, = usw.) versehenen, in beliebiger Anzahl und Form, üblicherweise als Würfel und/oder flache körper- oder plattenartige Einheiten gefertigten Spielelementen, aus denen die betreffenden arithmetischen Operationen bzw. Gleichungen aufgestellt werden können, die dann auf Spieltafeln von quadratischer Feldeinteilung an die entsprechende Stelle eingesetzt werden können. Zur Lösung der gestellten Aufgaben werden die entsprechenden arithmetischen Einheiten aus dem Vorrat der Spiele herausgesucht, und zu den auf der Speiltafel befindlichen Einheiten der Aufgabe, am zutreffenden Platz angereiht. Die zur Bezeichnung der gestellten Aufgabe vorgesehenen Einheiten haben zweckmäßig eine andere Farbe, wodurch ein Unterschied nicht nur zu Spielbeginn besteht, sondern auch der Spielerfolg kontrolliert werden kann. Mit Benützung mehrerer Spieltafeln können auch mehrere Spieler gleichsam wettkampfartig am Spiel teilnehmen.

| 1 | 1 | 1 | 1 | 1 | 1 | . | : | + |
|---|---|---|---|---|---|---|---|---|
| 2 | 2 | 2 | 2 | 2 | 2 | . | : | + |
| 3 | 3 | 3 | 3 | 3 | 3 | . | : | + |
| 4 | 4 | 4 | 4 | 4 | 4 | . | : | + |
| 5 | 5 | 5 | 5 | 5 | 5 | . | : | + |
| .6 | .6 | .6 | .6 | .6 | .6 | − | = | ⌐ |
| 7 | 7 | 7 | 7 | 7 | 7 | − | = | ⌣ |
| 8 | 8 | 8 | 8 | 8 | 8 | − | = | ⌐ |
| .9 | .9 | .9 | .9 | .9 | .9 | − | = | ⌣ |
| 0 | 0 | 0 | 0 | 0 | 0 | − | ⌣ | ⌐ |

Fig.1

Croydon Printing Company Ltd.

## Zahlenlogisches Spiel

Die Erfindung betrifft ein zahlenlogisches Spiel, das von den ersten Klassen der allgemeinen Grundschule an (ab dem 7.-8. Lebensjahr) zum Erlernen und dem Einüben von Rechenoperationen der Grundstufe als geeignetes Lehrmittel, später aber in höherem Alter als angenehmes und nützliches Zerstreuungsmittel gebraucht werden kann. Es eignet sich vorzüglich auch zum Üben von komplexeren und komplizierteren mathematischen Operationen der Grundstufe, ferner auch zum Aufstellen von Kopfrechnen-Operationen, zum Abschätzen ihrer Größenordnung, schließlich zur Fortentwicklung der Kombinationsfähigkeit für das Lösen von Gleichungen mit Unbekannten, die schnelles Reagieren und logisches Rechnen erfordern.

Hier will die Erfindung Abhilfe schaffen. Die Erfindung, wie sie in den Ansprüchen gekennzeichnet ist, löst die Aufgabe durch ein zahlenlogisches Spiel, welches aus einer beliebigen Anzahl und beliebigen Form von, mit Zahlen und arithmetischen Operationszeichen versehenen, in üblicher Weise als Würfel und/oder als flache Körper bzw. Plättchen ausgestalteten Einheiten besteht, aus denen arithmetische Operationen

0087622

bzw. Gleichungen zusammengestellt werden können. Das Wesen des Spiels besteht darin, daß aus diesen Einheiten je nach der Aufgabe solche zu lösende Rechenoperationen oder Gleichungen zusammengestellt werden können, welche durch das Ermitteln und den Ersatz der fehlenden Einheiten von Zahlen- bzw. Operationscharakter zu lösen sind. Die zu lösenden Rechenoperationen bzw. Gleichungen können aus den mit Zahlen und Operationszeichen bezeichneten Einheiten, den sogenannten Spielelementen durch Wählen, Würfeln oder nach vereinbarten Spielregeln bestimmt und zusammengestellt werden.

Im folgenden wird die Erfindung anhand der lediglich ein Ausführungsbeispiel darstellenden Zeichnung näher erläutert. Es zeigt:

Figur 1    Anordnung einer Garnitur der Zahlen- und Operations-Einheiten, der sogenannten Spielelemente;

Figur 2    Zahlen- und Operationsspielelemente-Vorrat für eine zu lösende Rechenaufgabe ,

Figur 3    Zu Spielbeginn aufgestellte arithmetische Operationsaufgabe, sowie eine Zeile der Spieltafel, bzw. die zu lösende, noch unvollständige Gleichung

Figur 4    Lösung der Aufgabe, und als Fortsetzung des Spieles weitere arithmetische Aufgaben bzw. Gleichungen und deren Lösung auf der Spieltafel.

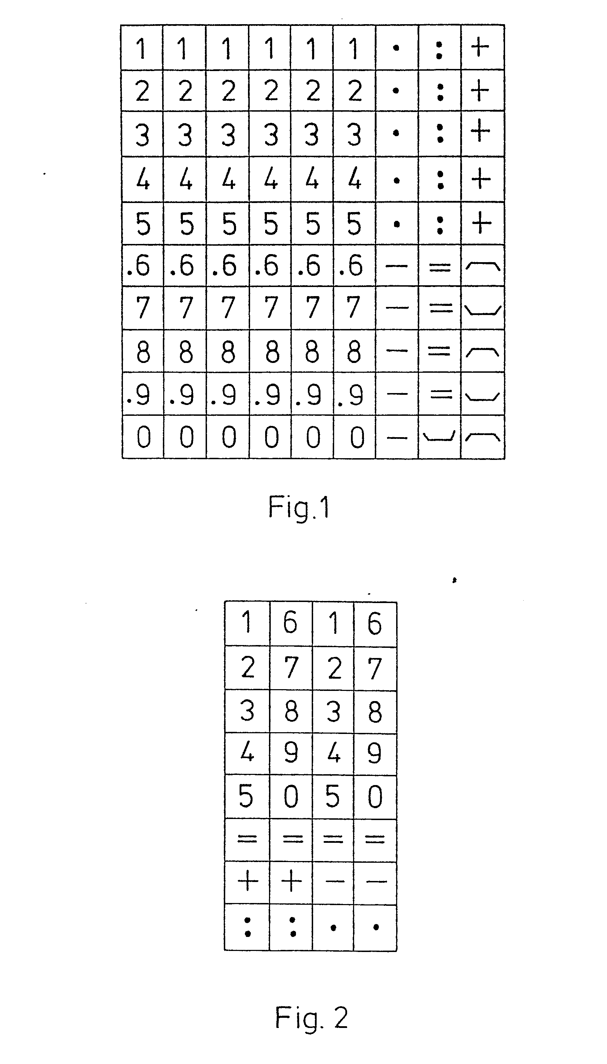

Als Beispiel der Zahlen- und Zeichen-Bezeichnungen der Elemente des zahlenlogischen Spieles ist eine Garnitur dieser Einheiten in Fig. 1 dargestellt.

Die eine Art das Spiel zu beginnen kann darin bestehen, daß die Mitspieler die zu lösende arithmetische Operation durch Würfeln ermitteln und aufstellen. Zu diesem Zweck gehören zu einer Garnitur von Spieleinheiten z.B. auch 11 Stück Spielwürfel, von denen z.B. 3 Würfel mit Operationszeichen und zwar für Addition (+), Substraktion (-), Multiplikation (.), Division (:), Gleichheit (=), Klammer () versehen sind, während 8 Würfel mit Zahlen 0 - 9 (abwechselnd auf den 6 Seiten des Würfels) versehen sind.

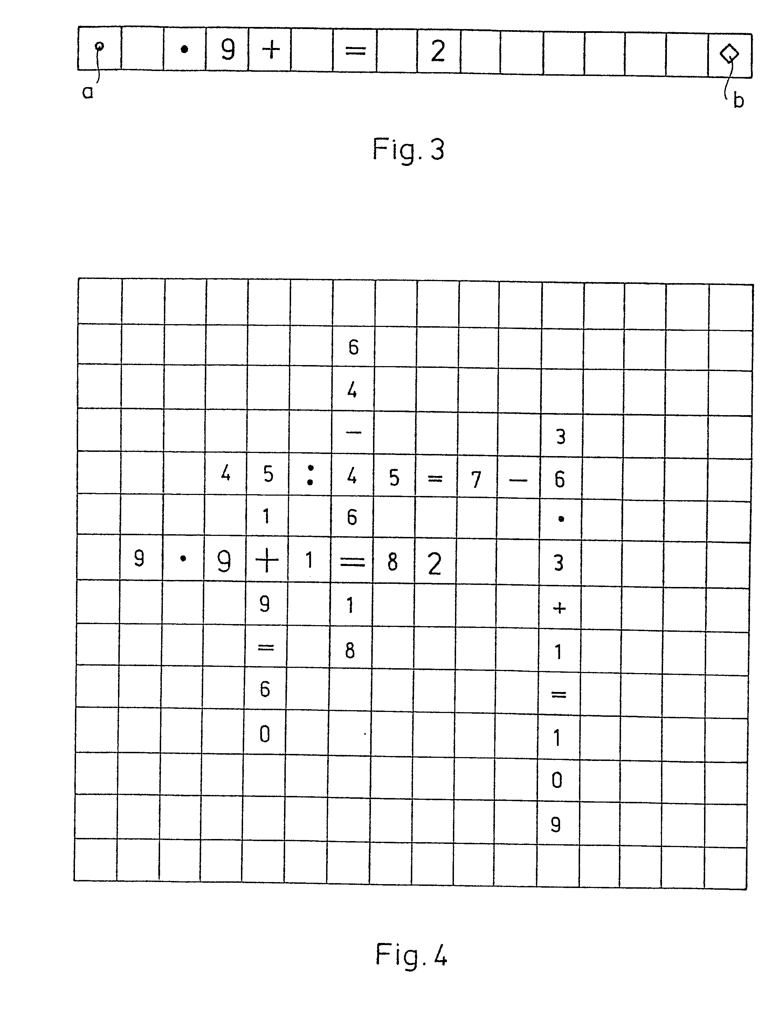

Die zum Aufstellen der zu lösenden arithmetischen Operation und Gleichungen zu benützenden Operationsspielelemente sind in Fig. 2 zu sehen, die als Garnitur gleichfalls in einer, Spielteile enthaltenden, tragbaren Schachtel angeordnet sind. Um die gestellte Aufgabe immer unterscheiden zu können, und danach beim Auswerten des Ergebnisses dies festhalten zu können, werden zweckmäßig zur Würfelgarnitur nach Fig. 2 anders gefärbte z.B. rote Spielelemente benützt. Zum Aufstellen der beabsichtigten Aufgabe bzw. zu verrichtenden Operation können z.B. zum Spielvorrat 20 Stück rote Operationsspielelemente gehören, u.zw. etwa: 2 Stück.Addierungs-(+) 2 Stück Substrahierungs- (-), 2 Stück Multiplizierungs- (.), 2 Stück Dividierungs- (:) und 4 Stück Gleichheits- (=) Würfel gehören. Zu Beginn des Spieles werden die für die zu lösende Aufgabe bezeichneten roten Spielelemente von den teilnehmenden Spielern auf ihren eigenen Tafeln eingesetzt. Zu diesem Zweck gehören zu einer Spielgarnitur mehrere Spielelement-Vorräte (Fig.1) und Spieltafeln (Fig.3). Diese Tafeln sind zum Einsetzten der Spielelemente mit einer quadratischen Netzeinteilung entsprechender Größe versehen. Um die Positionen der Spielelemente auf den Spieltafeln zu sichern, sind in den beiden äußersten Netzquadraten der in Fig.3 dargestellten Spieltafelzeile Löcher (a) bzw. Vertiefungen (b) vorgesehen, die Spielelemente selbst aber mit in jene hineinpassenden Spitzen, Zapfen oder Erhöhungen ausgestaltet; doch können auch andere positionssichernde Lösungen angewendet werden z.B. die magnetische Fixierung.

Mit den in einer Zeile des Spielfeldes auf der Spieltafel eingesetzten roten Spielelementen wird beispielsweise eine Rechenoperationsaufgabe aufgestellt, wie das in Fig.3 zu sehen ist. Nun werden zur Lösung der gestellten bzw. zu verrichtenden Aufgabe die entsprechenden Zahlen-, und Zeichen-Spielelemente aus den zu diesem Spiel gehörigen Vorrat (Fig.1) herausgesucht und gemäß der zu verrichtenden arithmetischen Operation auf der Spieltafel eingesetzt. Die als Aufgabe gestellte Operation hat rotgefärbte (Fig.2) Operations- und Zahlen-Spielelemente, welche in Fig.3 und in der die Lösung darstellenden Fig.4 mit dickeren Linien umrandet sind; auf Grund des Unterschiedes kann die Lösung dann kontrolliert werden. Gleiche Operationsaufgaben können aus Spielelementen auf zwei oder mehrere Spieltafeln als Unterrichts- oder Wettkampfaufgabe für zwei oder mehrere Mitspieler ausgesteckt, bzw. aufgestellt werden. Das Spiel kann dann auf den Spieltafeln durch Anschließen an die schon gelösten Operationen von weiteren Spielelementen in vertikaler und horizontaler Richtung, durch Würfeln oder mit sonstwie gewählten Zahlenwürfeln als beliebig gewählte, weitere Rechenoperationen fortgesetzt werden, wie dies auf Fig.4 zu ersehen ist.

Zu den fortgesetzten Operationen kann der zum Spiel gehörige Vorrat an Spielelementen benützt werden. Mit einer entsprechenden Anzahl an Spieltafeln und mehreren Garnituren an Zahlen- und Zeichenspielelementen können mehrere Personen, auch gruppenweise oder wettkampfartig mit einander spielen, z.B. mit dem Ziel, wer dieselbe Gleichung am schnellsten löst, oder: die Lösung von mehreren und neuen Operationen oder Gleichungen nach den Spielregeln, die als Zubehör des Spielzeugs der Spielschachtel beigelegt sind; der Spielleitung oder Regie des Spielleiters oder Lehrers folgend mit der Zeitmeßuhr, oder sonst nach den jeweiligen Vereinbarungen mit den Spielern. Auflagen der Spielregeln können z.B. sein, daß mit der Zahl "0" weder multipliziert noch dividiert werden darf, ferner daß zu jeder Gleichung bzw. zu jedem Schritt nur e i n Gleichheitszeichen und nur e i n beliebiger Klammerausdruck verwendet werden darf. Die Operation
aber sollen im allgemeinen horizontal und vertikal verfolgt
und erfaßt werden können, etwa nach Art der Kreuzworträtsel,
durch das Ausstecken von mathematischen Operationen, welche
an die auf der Tafel befindlichen Zahlen anschließen, usw.

Die Teile des Spielzeugs können in gefälliger Ausführung aus
schlagfester Plaste gefertigt werden. Die Zahlen- und Zeichen-
Spielelemente können in Schachteln aufbewahrt werden, welche
nach Fig.1 und Fig.2 für ihr Unterbringen nach Größe und Anzahl mit den nötigen Einsatzstellen ausgestaltet sind; die
Spieltafeln und sämtliche Zubehöre des Spieles aber kommen
in einer tragbaren, ästhätisch ausgestalteten, formgeplanten
Tasche in Handelsverkehr.

Das Spielzeug, bzw. Spiel kann mit Vorteil zum individuellen
Erlernen und Einüben, oder im Schulunterricht, beispielsweise
in den allgemeinen Schulen zum spielerischen Erlernen der mathematischen Grundlagen, in den höheren Klassen aber zum Erlernen
und Lösen zusammengesetzterer Aufgaben, wie die Lösung von
Gleichungen mit einer oder mehreren Unbekannten verwendet werden. Die Aufgaben können von den unterrichtenden Lehrern gestellt
werden, und die Schüler können dann auf Grund der Schnelligkeit
der Lösung, Anzahl der Fehler und/oder nach Richtigkeit des
Ergebnisses Zensuren erhalten, bzw. klassifiziert werden. Die
Spieltafeln haben genügend viele quadratische Einzelfelder und
beschränken daher nicht das Einsetzten der Zahlen und Operationszeichen. Die auf den Spielwürfeln dargestellten Zahlen und Operationszeichen ermöglichen das schnelle und fortlaufende Auslegen neuer, oder an die vorherige Operation anschließbarer Aufgaben, ein hochgradiges Variieren und die Ausnützung sämtlicher
Felder der Spieltafeln.

Das Spiel kann den mathematischen Regeln nach benützt, und damit
das korrekte Vollführen der wettbewerbartigen Spiele gesichert
werden.

Die in Fig.1 beispielsweise als Vorrat dargestellte Anzahl von Spielelementen, kann natürlich auch anderswie zusammengestellt werden. Es kann sich als zweckmäßig erweisen, für die unteren Klassen der allgemeinen Grundschulen einfachere und deshalb billigere Spiele für Operationen der Grundstufe zusammenzustellen, während für die fortlaufenden, zusammengesetzten, bzw. komplizierteren mathematischen Operationen und Gleichungen die Spiele aus einer größeren Anzahl von Spielelementen zusammengesetzt werden. Zweckmäßig kann auch als Spieltafel der Deckel oder eine andere umgrenzende Seitenfläche der Tragtasche entsprechend ausgestaltet und benützt werden.

PATENTANSPRÜCHE :

1. Zahlenlogisches Spiel, dadurch g e k e n n z e i c h -
n e t , daß es in beliebiger Anzahl und  zweckentsprechender Form mit Zahlen und arithmetischen Operationszeichen versehene, üblicherweise würfelförmige
und/oder quadratische, flache körper- oder plattenhafte
Spielelemente, und für das Einsetzten dieser Spielelemente Spieltafeln hat, auf denen Öffnungen, Vertiefungen
bzw. Erhöhungen (a, b) ausgestaltet sind, daß die Position der einzelnen Spielelemente auf den nach der Rechhenoperation ihnen zukommenden Stellen jeweils gesichert
ist.

2. Zahlenlogisches Spiel nach Anspruch 1, dadurch g e k e n n -
z e i c h n e t , daß die Spielelemente selbst, zur
Sicherung ihres Platzes auf der Spieltafel, bzw. zum Einsetzen mit Zapfen, Vertiefungen oder Erhöhungen versehen
sind.

3. Zahlenlogisches Spiel nach Anspruch 1, dadurch g e k e n n -
z e i c h n e t , daß die das Einsetzen der Spielelemente
auf den Spieltafeln sichernden Ausgestaltungen  in einem
Netz von quadratischen Feldern angeordnet sind.

4. Zahlenlogisches Spiel nach einem der Ansprüche 1-3, dadurch
g e k e n n z e i c h n e t , daß es zum Aufstellen der zu
verrichtenden Rechenoperationen, bzw. Aufgaben auch Spielelemente besitzt, deren Oberflächen gefärbt, oder gefärbt
und mit Zahlen oder Operationszeichen kennzeichnet sind.

5. ZahlenlogischesSpiel nach einem der Ansprüche 1-4, dadurch
g e k e n n z e i c h n e t , daß es auch Spielwürfel hat, die mit Zahlen oder Operationszeichen versehen sind.

6. Zahlenlogisches Spiel nach einem der Ansprüche 1-5,
   dadurch g e k e n n z e i c h n e t , daß die Spielelemente und Spieltafeln garniturartig in einer sie
   aufnehmenden, tragbaren Schachtel bzw. Tasche untergebracht sind.

7. Zahlenlogisches Spiel nach einem der Ansprüche 1-6
   dadurch g e k e n n z e i c h n e t , daß der Deckel
   oder eine andere der umgrenzenden Seiten der Tragschachtel bzw. Tasche für Aufbewahrung des Spieles,
   auch als Spieltafel ausgestaltet ist.

| 1 | 1 | 1 | 1 | 1 | 1 | . | : | + |
|---|---|---|---|---|---|---|---|---|
| 2 | 2 | 2 | 2 | 2 | 2 | . | : | + |
| 3 | 3 | 3 | 3 | 3 | 3 | . | : | + |
| 4 | 4 | 4 | 4 | 4 | 4 | . | : | + |
| 5 | 5 | 5 | 5 | 5 | 5 | . | : | + |
| .6 | .6 | .6 | .6 | .6 | .6 | — | = | ⌒ |
| 7 | 7 | 7 | 7 | 7 | 7 | — | = | ⌣ |
| 8 | 8 | 8 | 8 | 8 | 8 | — | = | ⌒ |
| .9 | .9 | .9 | .9 | .9 | .9 | — | = | ⌣ |
| 0 | 0 | 0 | 0 | 0 | 0 | — | ⌣ | ⌒ |

Fig.1

| 1 | 6 | 1 | 6 |
|---|---|---|---|
| 2 | 7 | 2 | 7 |
| 3 | 8 | 3 | 8 |
| 4 | 9 | 4 | 9 |
| 5 | 0 | 5 | 0 |
| = | = | = | = |
| + | + | — | — |
| : | : | . | . |

Fig. 2

| | o | | • | 9 | + | | = | | 2 | | | | | | | | ◇ |
|---|---|---|---|---|---|---|---|---|---|---|---|---|---|---|---|---|---|

a                                     b

## Fig. 3

| | | | | | | 6 | | | | | | | | | | | |
|---|---|---|---|---|---|---|---|---|---|---|---|---|---|---|---|---|---|
| | | | | | | 4 | | | | | | | | | | | |
| | | | | | | — | | | | | 3 | | | | | | |
| | | | 4 | 5 | : | 4 | 5 | = | 7 | — | 6 | | | | | | |
| | | | | 1 | | 6 | | | | | • | | | | | | |
| | 9 | • | 9 | + | 1 | = | 8 | 2 | | | 3 | | | | | | |
| | | | | 9 | | 1 | | | | | + | | | | | | |
| | | | | = | | 8 | | | | | 1 | | | | | | |
| | | | | 6 | | | | | | | = | | | | | | |
| | | | | 0 | | | | | | | 1 | | | | | | |
| | | | | | | | | | | | 0 | | | | | | |
| | | | | | | | | | | | 9 | | | | | | |
| | | | | | | | | | | | | | | | | | |

## Fig. 4

Europäisches
Patentamt

EUROPÄISCHER RECHERCHENBERICHT

**0087622**
Nummer der Anmeldung

EP 83 10 1188

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | CA-A-1 054 790 (HENNING GEORGES) <br> * Figur 1; Ansprüche * | 1-3,5 | G 09 B 19/02 |
| X | FR-A-2 113 480 (JAN VAN ES) <br><br> * Figuren 1,4; Ansprüche 5-8 * | 1-3,5-7 | |
| A | US-A-3 267 590 (C.P. BROWNING) <br> * Figuren; Ansprüche * | 1-3 | |

| RECHERCHIERTE SACHGEBIETE (Int. Cl. ³) |
|---|
| G 09 B 19/02 |

Der vorliegende Recherchenbericht wurde für alle Patentansprüche erstellt.

| Recherchenort <br> DEN HAAG | Abschlußdatum der Recherche <br> 01-06-1983 | Prüfer <br> KORAHNKE G.J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82